# EUROPEAN PATENT SPECIFICATION

(11) **EP 1 948 745 B1**
(45) Date of publication and mention of the grant of the patent: **24.08.2011**
(21) Application number: 06794753.1
(22) Date of filing: 12.10.2006
(51) Int. Cl.: C09D 11/00, C09D 11/10, B41J 11/00

(54) **AN INK-JET PRINTING METHOD**
FARBSTRAHLDRUCKVERFAHREN
PROCEDE D'IMPRESSION A JET D'ENCRE

(30) Priority: 15.11.2005 GB 0523252
(43) Date of publication of application: 30.07.2008
(73) Proprietor: SERICOL LIMITED, Broadstairs, Kent CT10 2LE (GB)
(72) Inventor: NOUTARY, Carole, Kent CT10 1HZ (GB); RUNACRE, Angelique, Catherine, Joyce, Kent CT11 8AS (GB); BROOKS, Matthew, Kent CT12 4EQ (GB)
(74) Representative: Gillard, Richard Edward
(86) International application number: PCT/GB2006/003806
(87) International publication number: WO 2007/057632

(56) References cited:
- EP-A1- 1 486 526
- US-A1- 2004 246 323
- US-B1- 6 656 545

## Description

This invention relates to an ink-jet printing method and in particular to a printing method using a cationic ink-jet ink cured by low-intensity actinic radiation.

In ink-jet printing, minute droplets of black or coloured ink are ejected in a controlled manner from one or more reservoirs or printing heads through narrow nozzles on to a substrate, which is moving relative to the reservoirs. The ejected ink forms an image on the substrate. For high-speed printing, the inks must flow rapidly from the printing heads, and to ensure that this happens they must have a low viscosity at the jetting stage. The ink viscosity is typically below 25 mPas at jetting temperature.

Therefore, ink-jet inks for application at or near ambient temperatures are commonly formulated to contain a large proportion of a mobile liquid vehicle or solvent. In one common type of ink-jet ink this liquid is water, see for example the paper by Henry R. Kang in the Journal of Imaging Science, 35(3), pp. 179-188 (1991). In these inks, great effort must be made to ensure the inks do not dry in the head due to water evaporation.

In another common type the liquid is a low-boiling solvent or mixture of solvents - see, for example, EP 0 314 403, EP 0 424 714 and WO 01/36546. Unfortunately, ink-jet inks that include a large proportion of water or solvent cannot be handled after printing until the inks have dried, either by evaporation of the solvent or its absorption into the substrate. This drying process is often slow and in many cases (for example, when printing on to a heat-sensitive substrate such as paper) cannot be accelerated.

Another type of ink-jet ink contains unsaturated organic monomers, oligomers or prepolymers that polymerise by irradiation, commonly with UV light, in the presence of a photoinitiator. This type of ink has the advantage that it is not necessary to evaporate the liquid phase to dry the print; instead the print is exposed to radiation to cure or harden it, a process that is more rapid than evaporation of solvent at moderate temperatures. Thus, while such inks can tolerate traces of water and organic solvent, such inks are typically substantially free of water and organic solvent.

There are two main technologies that can be used in a UV curing process. The first method uses free-radical species to initiate the polymerisation of reactive monomers. These monomers may be acrylate or methacrylate esters, as is disclosed in WO 97/31071, and/or other components such as vinyl ethers as disclosed in WO 02/061001.

Another method used in UV curing technology is the generation of very strong acids to initiate the cationic polymerisation of reactive monomers. Acids are generated from the decomposition of photoinitiators under the presence of UV light. Such commercially available photoinitiators include sulfonium and iodonium salts. The decomposition of the onium salts release acidic species and also an aryl radical that can be used to incorporate materials capable of being polymerised by free-radical mechanisms. The monomers that can be used in cationic curing are, for example, epoxides, allyl ethers and vinyl ethers. Oxetanes and hydroxy-bearing compounds are also typically used in cationic systems to maximise the reactivity by reacting with epoxy systems through ring opening and/or chain transfer reactions, as disclosed in US 2004/0246 323 and EP 1486 526.

Some ink systems may contain elements of both cationic and free-radical chemistry such that when polymerisation of the ink occurs upon irradiation with UV light, both free radical and acid initiating species are generated by the photoinitiators of each respective type and the monomers in the system are of suitable chemical type to be polymerised by either cationic or free radical propagation. Such inks are termed "hybrid inks".

The benefits of cationic curing over radical curing include low shrinkage post curing, excellent chemical resistance and good adhesion. Cationic systems are not sensitive towards oxygen inhibition and once initiated by the acidic species generated by the cleavage of the photoinitiator under UV light, the reaction proceeds until no more available reactive groups are able to be converted. This means that cationic technology can cure thick, pigmented ink films more easily than free radical technology. The lower shrinkage and high flexibility of these systems make cationic curable inks very suitable for printing onto flexible substrates. The high percentage conversion of the reactive groups in the system also means that the resultant cured coating has a high chemical resistance.

In both cationic and radical systems, initiators are present to initiate curing. The initiators are usually photoinitiators and hence an ink-jet printer requires a source of actinic radiation. Suitable sources of actinic radiation are medium- and high-pressure mercury vapour UV lamps. However, one of the disadvantages of using these lamps is that they have a high dose energy (about 100 and 400 mJ/cm² for medium- and high-pressure mercury vapour UV lamps; respectively) and are switched on for long periods of time, both of which cause a high degree of heat to be produced makers it necessary to have sophisticated cooling equipment. The cooling equipment produces either a high air flow or water cooling. The cooling equipment is bulky and is expensive to incorporate into an ink-jet printer. However, failure to cool the UV lamp may damage the lamp and causes distortion of the substrate.

Various methods have been proposed in order to avoid the problems associated with such lamps. For examples LED devices have been proposed although this provides additional requirements on the ink. An inert atmosphere has also been used in order to minimise the deleterious effect of oxygen on the curing process. See WO 2004/056581.

However, there remains a need for a printing method which avoids the problems associated with such lamps.

Accordingly, the present invention provides a method of ink-jet printing comprising printing an ink-jet ink comprising at least one cationically polymerisable monomer, oligomer and/or prepolymer and at least one cationic photoinitiator on to a substrate using an ink-jet printer wherein the substrate has a surface pH of less than 7.0 and wherein the ink is cured using actinic radiation which provides a dose energy at the surface of the substrate of no more than 80 mJ/cm²

That is, the use of a cationic ink on a substrate having an acidic surface enables lower intensity light to be used to achieve a cured film. This has a number of advantages, including lower power consumption of the curing unit, lower temperature imparted by the UV lamp to the substrate and ink during curing leading to the use of temperature-sensitive materials, lower shrinkage of materials sensitive to temperature and lower running costs.

The ink-jet ink used in the present invention may be a cationic ink or a hybrid cataonic/radical ink. Such inks are known in the art and hence only a brief outline will be provided wherein.

The ink-jet ink used in the present invention comprises at least one cationically polymerisable monomer, oligomer or prepolymer. That is, at least one component which contains one or more functional groups which react together by a cationic mechanism following initiation by a cationic photoinitiator to form a polymer, thereby providing a cured ink. The monomers, oligomers and/or prepolymers may possess different degrees of functionality, and a mixture including combinations of mono, di, tri and higher functionality monomers, oligomers and/or prepolymers may be mused. Suitable monomers, oligomer and/or prepolymer include epoxides, allyl ethers, vinyl ethers, oxetanes and hydroxy-containing compounds. Epoxides which may be used in the ink formulation are Uvacure 1500, Uvacure 1501, Uvacure 1502 from UCB Chemicals, UVR 6105, UVR 6110 and UVR 6128 from Dow. Oxetane monomers which may be used include 3-ethyl-3-hydroxymethyl-oxetane, bis{[1-ethyl(3-oxetanil)]methyl} ether and 3-ethyl-3-[(2-ethylhexyloxy)methyl] oxetane.

The ink also contains at least one cationic photoinitiator, such as an onium salt, e.g. sulfonium and iodonium salts. Examples of iodonium salts are Rhodorsil PI 2074 from Rhodia, MC AA, MC BB, MC CC, MC CC PF, MC SD from Siber Hegner and UV9380c from Alfa Chemicals. Sulfonium salts include UVI-6972, UVI-6974, UVI-6976, UVI-6990, UVI-6992 from Dow and Uvacure 1590 from UCB Chemicals.

As discussed hereinabove, the ink is preferably substantially free of water and volatile organic solvents.

The ink preferably further comprises at least one colouring agent. The colouring agent may be either dissolved or dispersed in the liquid medium of the ink. Preferably the colouring agent is a dispersible pigment, of the types known in the art and commercially available such as under the trade-names Paliotol (available from BASF plc), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

The ink may also be a hybrid ink which further comprises at least one radically polymerisable monomer, oligomer and/or prepolymer and at least one radical photoinitiator. The radically polymerisable monomers, oligomers and/or prepolymers may be an ester of acrylic or methacrylic acid, such as octyl acrylate, decyl acrylate, hydroxyethyl methacrylate lauryl acrylate, phenoxyethyl acrylate, hexanediol diacrylate, polyethylene glycol diacrylate, tri(propylene glycol) triacrylate, trimethylolpropane triacrylate, bis(pentaerythritol) hexa-acrylate; or an N-vinylamide such as, N-vinylcaprolactam or N-vinylformamide; or acrylamide or a substituted acrylamide, such as acryloylmorpholine. Preferred monomers, oligomers or prepolymers are the acrylate esters of the ethoxylated or propoxylated derivatives of di-, tri- or tetrahydric aliphatic alcohols, and the acrylate or methacrylate esters of epoxy, urethane, melamine or polyester resins or their ethoxylated or propoxylated derivatives, or combinations thereof. These components may be sold under the names: Ebecryl 40, Ebecryl 1039, DPGDA, TPGDA, ODA-n, TTEGDA, Ebecryl 160,OTA 480, IRR 289, TMPTA, IRR 184, Ebecryl 111, Ebecryl 110, IBOA, HDDA, Ebecryl 81, ACTILANE 872, ACTILANE 735, ACTILANE 584, ACTILANE 525, ACTILANE 440, ACTILANE 432, ACTILANE 430, ACTILANE 423, ACTILANE 421 and ACTILANE 251.

Photoinitiators for free radical curing include: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino-(4-morpholinophenyl)butan-1-one, benzil dimethylketal, bis(2,6-dimethylbenzoyl)-2,4,4-trimethylpentylphosphine oxide, . 2,4,6-trimethylbenzoyldiphenylphosphine oxide, 2-methyl-1-[4-(methylthio)phenyl]-2-morpholinopropan-1-one, 2,2-dimethoxy-1,2-diphenylethan-1-one or 5,7-diiodo-3-butoxy-6-fluorone, or combinations thereof.

The monomer, oligomer and/or polymer is preferably present at 40-95 wt%, preferably 5-80 wt% based on the total weight of the ink. As explained herein, this may be based on a cationic or hybrid system. The photoinitiator is preferably present at 1-20 wt%, preferably 4-10 wt% based on the total weight of the ink. The total proportion of pigment present is preferably from 0.5 to 30% by weight, more preferably from 1 to 5% by weight based on the total weight of the ink.

Other components of types known in the art may be present in the ink to improve the properties or performance. These components may be, for example, surfactants, defoamers, dispersants, synergists for the photoinitiator, stabilisers against deterioration by heat or light, reodorants, flow or slip aids, biocides and identifying tracers.

The ink-jet ink of the present invention preferably has a viscosity of less than 100 mPas, more preferably less than 50 mPas and most preferably less than 25 mPas at 25°C. The particles dispersed in the ink should be sufficiently small to allow the ink to pass through an ink-jet nozzle, typically having a particle size of less than 8 µm, preferably less than 5 µm and particularly preferably less than 1 µm.

The ink is preferably applied as thin layer as a thin layer has been found to be most heavily affected by the acidic surface of the substrate. The thickness of the ink layer prior to curing is preferably 15 microns or less, more preferably 12 microns or less, more preferably 8 microns or less and most preferably 6 microns or less.

The nature of the substrate is not limited and includes any substrate which may be subjected to ink-jet printing, provided that the surface is acidic, that is that the surface has a pH of less than 7.0, preferably less than 5.0 and most preferably less than 3.5. The acidic surface may be an intrinsic feature of the substrate, or the surface may be applied by pre-coating the substrate with an acidic primer.

The substrate may be a polymer having acidic functional groups, such as a poly(vinyl acid) or PVC. The method of the present invention is ideal for low-weight flexible PVC substrates, such as self adhesive and banner grades. Examples of suitable substrates include:
Huntsman Fluted Display Caliper 4/700 pH = 6.17
Ritrama RI Jet Gloss White S/V VM Removable pH = 6.20
Ritrama 145/100 VM Removable pH = 6.05
Ritrama RI 220 80 micron Gloss Gold SRV Permanent pH = 6.23
Avery Graphic Matt Black pH = 6.12
Avery Graphic Matte White pH = 6.46
Profi Screen Ablosbar pH = 6.15
Avery Graphics Silver pH = 6.54
Staufen Gloss White PVC RW PR316 00 202E GLS/XLS 1522 pH = 6.64
Fascal Gloss Vinyl Transparent Perm Solid Bk GSM 305 Mic 100 pH = 6.34

The primer is a coating composition containing an acidic component. The primer may be based on a solvent- or water-based system if the primer is to be thermally dried, or a radiation curable composition if the primer is to be UV cured as discussed in more detail hereinabove with regard to ink vehicles. The resultant formula must have a pH of less than 7.0, preferably less than 5.0 and most preferably less than 3.5 after application and drying/curing. The primer may also contain other components known in the art such as, but not limited to surfactants, defoamers, dispersants, synergists for the photoinitiator, stabilisers against deterioration by heat or light, reodorants, flow or slip aids, and biocides. The formulation of the primer can be modified in such a way that it is suitable for a wide variety of application methods, such as ink-jet, curtain coating, screen printing or wiping with a lint-free applicator.

The use of primers is known in the art but they generally rely on the use of resins to provide a different surface for the ink to attach chemically or physically wet more effectively. This invention does not rely on the ink attacking the primer as the acidic nature of the primer renders the polymerisation reaction of the ink more efficient and hence greater adhesion and faster cure speed or cure speed at lower light powers/dosages is possible.

Accordingly, the present invention provides a method of pre-treating a substrate for ink-jet printing comprising coating the substrate with a primer having a pH after application and drying or curing of less than 7.0. The present invention also provides a method of ink-jet printing comprising printing an ink-jet ink comprising at least one cationically polymerisable monomer, oligomer or prepolymer and at least one cationic photoinitiator on to a substrate using an ink-jet printer wherein the substrate has been treated with a primer having a pH after application and drying of less than 7.0.

The surface pH of the substrate, with or without pre-coating, may be determined by the following method: 1 ml of ultra pure water (determined by a conductivity measurement showing a quality of 14-18 MΩcm) was placed on the surface of the substrate and allowed to stand for two minutes at room temperature (20°C). After standing, the pH of the water was measured with a double-junction pH electrode and temperature probe attached to a Hanna Instruments HI9321 Microprocessor pH meter. Alternatively, the pH of the water may be measured using a Mettler Toledo MP225 pH meter. The pH measurement of the water provides the surface pH of the substrate.

The ink of the present invention is cured using low-intensity actinic radiation. By low-intensity is meant that the ink is exposed to actinic radiation, usually UV radiation, having a dose energy at the surface of the substrate of no more than 80 mJ/cm². Preferably the minimum dose energy is 0.01, more preferably 0.1 and most Preferably 0.2 mJ/cm². Preferably the maximum dose energy is 50 and most preferably 10 mJ/cm². Examples of UV light sources that can be used include UV light emitting diodes (LEDs) and fluorescent lamps. The dose energy of the radiation is the amount of energy received by the ink at the surface of the substrate and may be measured by, for example, a UV Powermate Radiometer.

It has also been found that the acidic substrate advantageously continues to harden the cured film in a post-curing reaction which takes place even after irradiation has been discontinued.

The following non-limiting examples exemplify the present invention.

### Examples

The invention will now be described, by way of example, with reference to the following examples (parts given are by weight).

### Formulation 1 (cationic UV curable inkjet ink)

| | |
|---|---|
| BYK 307 | 0.10 |
| DISPERBYK 168 | 0.90 |
| ESACURE 1064 PHOTOINITIATOR | 8.00 |
| ARON OXETANE OXT-221 (DOX) | 22.00 |
| IRGALITE BLUE GLVO | 1.35 |
| OXETANE RESIN TMPO | 25.00 |
| CYRACURE UVR6105 | 37.40 |
| DOWANOL TPM | 5.25 |

### Formulation 2 (primer coating)

| | |
|---|---|
| VINYLITE VYNS (VINYL COPOLYMER FROM WACKER CHEMIE) | 3.00 |
| METHOXYPROPANOL ACETATE | 45.60 |
| CYCLOHEXANONE | 11.40 |
| METHOXYPROPANOL | 40.00 |

### Example 1

A 12 micron coating of cationic UV curable ink of formulation 1 described above onto Avery Banner vinyl (pH 6.91) or Avery 400 Permanent self adhesive Vinyl (pH 6.96)- both flexible self adhesive PVC foils - will cure even when placed in the dark for a few hours without exposure to UV light, with a degree of film formation happening in minutes. Cure of the same film is not achieved in the same exposure conditions on Forex closed cell foam PVC (pH 7.66) or on blue-backed paper (pH 7.0). By comparison, after 24 hours storage in the same conditions, free-radical inks on the same substrate will still be tacky/wet.

The same ink formulation can be cured on the same PVC substrates in much shorter time frames when exposed to UV irradiation. For example a linear speed of up to 80 m/min is achieved when using a Primarec UV lamp (H Type bulb having an output of 120W/cm) providing an intensity of 250 mJ/cm². However, a linear speed of up to 40 m/min may still be achieved when using an LED of 395nm-centered emission having an intensity of 50 mJ/cm², with no cooling of the light source required.

### Example 2

Example 2a (Reference):
Glass was coated with a 2% solution of Vinylite VMCC (a maleic acid-vinyl chloride-vinyl acetate copolymer supplied by Wacker Chemie) in methyl ethyl ketone before applying a 12 micron coating of ink of formulation 1 and cured at 40 m/min (Primarc lamp, H-bulb, output 120W/cm) providing an intensity of 500 mJ/cm². This gave excellent scratch resistance, compared to the control (no primer wipe), which could be easily scratched off. Example 2b: Similar properties may also be obtained using an LED of 395nm-centered emission having an intensity of 50 mJ/cm², with no cooling of the light source required, albeit with a reduced cure speed.

### Example 3

The cure speed and adhesion performance of the ink according to Formulation 1 was assessed on an extensive range of substrates, untreated and treated with the primer prepared according to Formulation 2. The primer was applied using a cloth and allowed to dry. An enhanced cure speed and adhesion was achieved with the treated substrates, even when a lower UV lamp power setting was used. The lamp power setting required to achieve good adhesion at a constant conveyor speed of 60 m/min. for each of the substrates tested is reported below.

| **Substrate** | **Untreated substrate** | **Substrate treated with Formulation 2** |
|---|---|---|
| 5 mm Foamalux Brett Martin PVC | 3 | 2 |
| 3 mm Foamalux Brett Martin PVC | 3 | 2 |
| 5 mm Forex Classic PVC | 3 | 2 |
| 3 mm Forex Classic PVC | 3 | 2 |
| 2 mm Veralite 200 | 4 | 2 |
| 2 mm Lexan Excel D Polycarbonate | 4 | 2 |
| 5 mm Repsol Cast Acrylic Clear | 4 | 2 |
| Alcan Polystyrene | 3 | 2 |
| 5 mm Gatorplast HIPS | 4 | 2 |
| 240 microns Falcon Gloss White PVC | 3 | 2 |
| Quantum Extruded Clear PVC | 4 | 2 |
| Sintra | 3 | 2 |
| Coarse Banner Vinyl | 3 | 2 |
| Avery Permanent 400 Vinyl | 3 | 2 |
| Prilar Silver | 4 | 2 |

The UV lamp is a VZero lamp (A-type bulb from Integration Technology) with the power settings 1 to 4 correlating to:

| | |
|---|---|
| Power 1 | 700 W |
| Power 2 | 900 W |
| Power 3 | 1200 W |
| Power 4 | 1400 W |

### Example 4

Two substrates were tested using the ink of Formulation 1, namely Foamalux Foam PVC Sheet (Brett Martin) pH = 8.19 and 145/100 RM Removable 100 micron pH = 6.05.

The two substrates and the formulation were placed under a Svecia drying unit with 1 x medium-pressure 80 W/cm H bulb providing a UV dose at the surface of the substrate of 25 mJ/cm². Only the coating on the substrate having pH 6.1 PVC was cured, the coating on the substrate having pH 8.2 remaining wet.

### Example 5

Curing was performed using Integration Technology low-power Hg lamps (as on Inca Spyder 320). The substrates used were Ritrama 145/100 VM Removable pH = 6.05 and Brett Martin Foamalux Foam PVC Sheet pH = 8.19.

For 6 micron coatings, after exposure to a UV dose of 19 mJ/cm² followed by 30 mins in the dark the coating on the acidic substrate was touch dry whereas the coating on the Foamalux substrate remained wet.

## Claims

1. A method of ink-jet printing comprising printing an ink-jet ink comprising at least one cationically polymerisable monomer, oligomer and/or prepolymer and at least one cationic photoinitiator on to a substrate using an ink-jet printer wherein the substrate has a surface pH of less than 7.0 and wherein the ink is cured using actinic radiation which provides a dose energy at the surface of the substrate of no more than 80 mJ/cm²_{.}

2. A method as claimed in claim 1, wherein the ink further comprises at least one radically polymerisable monomer, oligomer and/or prepolymer and at least one radical photoinitiator.

3. A method as claimed in claim 1 or 2, wherein the ink is substantially free of water and volatile organic solvents.

4. A method as claimed in any preceding claim, wherein the ink further comprises at least one colouring agent.

5. A method as claimed in claim 4, wherein the at least one colouring agent is a dispersible pigment.

6. A method as claimed in any preceding claim, wherein the pH of the substrate surface is less than 5.0.

7. A method as claimed in claim 6, wherein the pH of the substrate is less than 3.5.

8. A method as claimed in any of claims 1 to 5, wherein the body of the substrate has a pH of less than 7.0.

9. A method as claimed in any preceding claim, wherein the substrate is made of polyvinylchloride (PVC).

10. A method as claimed in any preceding claim, wherein the substrate is pre-treated with a primer coating having a surface pH of less than 7.0.

11. A method as claimed in any preceding claim, wherein the ink is cured using actinic radiation having a dose energy of 0.01 to 80 mJ/cm².

12. A method as claimed in claim 11, wherein the ink is cured using actinic radiation having a dose energy of 0. 1 to 50 mJ/cm².

13. A method as claimed in any preceding claim, wherein the ink has a thickness of 15 microns or less.

14. A method of ink-jet printing as claimed in any preceding claim wherein the substrate has been treated with a primer having a pH after application and drying or curing of less than 7.0.

## Patentansprüche

1. Verfahren zum Tintenstrahldrucken, umfassend das Drucken einer Tintenstrahltinte umfassend mindestens ein kationisch polymerisierbares Monomer, Oligomer und/oder Präpolymer und mindestens einen kationischen Photoinitator auf ein Substrat unter Anwendung eines Tintenstrahldruckers, wobei das Substrat einen Oberflächen-pH-Wert von weniger als 7,0 aufweist und wobei die Tinte unter Anwendung aktinischer Strahlung ausgehärtet wird, die eine Dosisenergie an der Oberfläche des Substrats von nicht mehr als 80 mJ/cm² bereitstellt.

2. Verfahren nach Anspruch 1, wobei die Tinte des Weiteren mindestens ein radikalpolymerisierbares Monomer, Oligomer und/oder Präpolymer und mindestens einen Radikalphotoinitiator umfasst.

3. Verfahren nach Anspruch 1 oder 2, wobei die Tinte im Wesentlichen von Wasser und flüchtigen organischen Lösungsmitteln frei ist.

4. Verfahren nach einem der vorhergehenden Ansprüche, wobei die Tinte des Weiteren mindestens ein Farbmittel umfasst.

5. Verfahren nach Anspruch 4, wobei mindestens ein Farbmittel ein dispergierbares Pigment ist.

6. Verfahren nach einem der vorhergehenden Ansprüche, wobei der pH-Wert des Substrats weniger als 5,0 beträgt.

7. Verfahren nach Anspruch 6, wobei der pH-Wert des Substrats weniger als 3,5 beträgt.

8. Verfahren nach einem der Ansprüche 1 bis 5, wobei der Körner des Substrats einen pH-Wert von weniger als 7,0 beträgt.

9. Verfahren nach einem der vorhergehenden Anspruche, wobei das Substrat aus Polyvinykchlorid (PVC) besteht.

10. Verfahren nach einem der vorhergehenden Ansprüche, wobei das Substrat mit einer Grundiermittelbeschichtung vorbehandelt wird, die einen Oberflächen-pH-Wert von weniger als 7,0 aufweist.

11. Verfahren nach einem der vorhergehenden Anspruche, wobei die Tinte unter Anwendung aktinischer Strahlung, die eine Dosisenergie von 0,01 bis 80 mJ/cm² aufweist, ausgehärtet wird.

12. Verfahren nach Anspruch 11, wobei die Tinte unter Anwendung aktinischer Strahlung, die eine Dosisenergie von 0,1 bis 50 mJ/cm² aufweist, ausgehärtet wird.

13. Verfahren nach einem der vorhergehenden Ansprüche, wobei die Tinte eine Dicke von 15 Mikron oder weniger aufweist.

14. Verfahren zum Tintenstrahldrucken nach einem der vorhergehenden Ansprüche, wobei das Substrat mit einem Grundiermittel behandelt worden ist, das einen pH-Wert nach dem Aufbringen und Trocknen oder Aushärten von weniger als 7,0 aufweist.

## Revendications

1. Procédé d'impression par jet d'encre comprenant l'impression d'une encre pour jet d'encre contenant au moins un monomère, un oligomère et/ou un prépolymère polymérisables cationiquement et au moins un photoinitiateur cationique sur un substrat employant une imprimante à jet d'encre, dans lequel le substrat a un pH de surface inférieur à 7.0 et dans lequel l'encre est cuite par un rayonnement actinique fournissant une énergie à la surface du substrat de 80 mJ/cm² maximum.

2. Procédé selon la revendication 1, dans lequel l'encre comprend au moins un monomère, un oligomère et/ou un prépolymère radicalement polymérisables et au moins un photoinitiateur de radicaux.

3. Procédé selon la revendication 1 ou 2, dans lequel l'encre est sensiblement exempte d'eau et de solvants organiques volatils.

4. Procédé selon l'une quelconque des revendications précédentes, dans lequel l'encre comprend en outre au moins un agent colorant.

5. Procédé selon la revendication 4, dans lequel le au moins un agent colorant est un agent dispersable.

6. Procédé selon l'une quelconque des revendications précédentes, dans lequel le pH de la surface du substrat est inférieur à 5.0.

7. Procédé selon la revendication 6, dans lequel le pH du substrat est inférieur à 3.5.

8. Procédé selon l'une quelconque des revendications 1 à 5, dans lequel le corps du substrat a un pH inférieur à 7.0.

9. Procédé selon l'une quelconque des revendications précédentes, dans lequel le substrat est en chlorure de polyvinyle (PVC)

10. Procédé selon l'une quelconque des revendications précédentes, dans lequel le substrat est prétraité avec un enduit d'apprêt ayant un pH de surface inférieur à 7.0.

11. Procédé selon l'une quelconque des revendications précédentes, dans lequel l'encre est cuite par un rayonnement actinique ayant une énergie de 0,01 à 80 mJ/cm².

12. Procédé selon la revendication 11, dans lequel l'encre est cuite par un rayonnement actinique ayant une énergie de 0,1 à 50 mJ/cm².

13. Procédé selon l'une quelconque des revendications précédentes, dans lequel l'encre a une épaisseur maximale de 15 microns.

14. Procédé d'impression par jet d'encre selon l'une quelconque des revendications précédentes, dans lequel le substrat a été traité avec un apprêt dont le pH, après application et séchage ou cuisson, est inférieur à 7.0.
